# DEMANDE DE BREVET EUROPEEN

(11) **EP 4 459 396 A2**
(43) Date de publication de la demande: **06.11.2024**
(21) Numéro de dépôt: 24201021.3
(22) Date de dépôt: 31.03.2022
(51) Int. Cl.: G05B 19/406

(54) **SURVEILLANCE DE MACHINE AUTOMATISÉE**

(30) Priorité: 07.06.2021 FR 2105996
(62) Demande divisionnaire de: 22719906.4
(71) Demandeur: KEYPROD, 75008 Paris (FR)
(72) Inventeur: MARC, Damien, Jacky, 77115 Blandy-les-Tours (FR); DION, Jean-Luc, Gilbert, Henri, 77144 Montévrain (FR); GHIENNE, Martin, Pierre, Michel, 92000 Nanterre (FR); KOSECKI, Arkadiusz, 95270 Viarmes (FR)
(74) Mandataire: IPAZ

(57) **Abrégé**

L'invention concerne des procédés et des systèmes de surveillance de machine automatisés.

Certains modes de réalisation donnés à titre d'exemple peuvent comprendre le traitement des données associées à une machine en effectuant une décomposition temps-fréquence, en effectuant un regroupement de phases, en effectuant une pseudo-distribution de temps-fréquence à corrélation croisée, et/ou en effectuant une détection de crête sur une énergie commune pour détecter des cycles de machine. Certains modes de réalisation donnés à titre d'exemple peuvent effectuer une opération d'apprentissage suivie d'une opération de suivi du processus, ceci facilitant le réglage et le fonctionnement avec une interaction d'utilisateur limitée.

## Description

### Domaine technique

La présente invention concerne généralement des systèmes et des procédés de surveillance d'équipement et de processus de fabrication et, plus particulièrement, des systèmes et des procédés automatisés d'analyse et de rapport de données pour des machines dans un environnement de production.

### Contexte

Des systèmes de surveillance de machine de fabrication sont communément utilisés dans une variété d'applications où l'on souhaite obtenir des informations concernant le fonctionnement des machines, en particulier des machines à commande numérique, dans un environnement de production, tel une usine. Les systèmes de surveillance classiques nécessitent souvent un accès au logiciel de commande de la machine et une modification de celui-ci, ainsi qu'une connectivité entre le système de commande de la machine et le système de surveillance. Un tel accès et une telle modification peuvent être difficiles ou coûteux, et certaines machines peuvent ne pas être facilement connectées à un système de surveillance. En conséquence, on souhaite prévoir un système de surveillance de machine automatisé qui évite ou limite la nécessité d'une interface directe avec un logiciel de commande ou un système de commande d'une machine.

### Divulgation de l'invention

La présente invention prévoit des systèmes et des procédés améliorés de surveillance de machine automatisé. Dans un mode de réalisation, le système de surveillance de machine automatisé comporte :
un premier capteur agencé pour détecter un premier paramètre associé à une première machine ;
un premier processeur couplé fonctionnellement pour recevoir des données associées au premier paramètre en provenance du premier capteur, le premier processeur étant en mesure de traiter les données associées au premier paramètre par au moins l'une des actions suivantes consistant à effectuer une décomposition temps-fréquence, à effectuer un regroupement de phases, à effectuer une pseudo-distribution de temps-fréquence à corrélation croisée, et à effectuer une détection de crête sur une énergie commune pour détecter des premiers cycles de machine ; et
un dispositif d'interface en mesure d'afficher au moins les données ou informations parmi les données traitées et les informations se rapportant aux données.

Selon l'invention, le premier processeur peut être disposé dans un premier module de machine associé à la première machine ; et le premier module de machine peut être connecté fonctionnellement au dispositif d'interface par le biais d'un réseau.

Selon l'invention, le premier capteur peut être connecté fonctionnellement à un premier module de machine associé à la première machine ; et le premier processeur peut être disposé dans un dispositif informatique, le dispositif informatique étant connecté fonctionnellement au premier module de machine et au dispositif d'interface par le biais d'un réseau.

Selon l'invention, le premier capteur peut être connecté fonctionnellement à un premier module de machine associé à la première machine ; et le premier processeur peut être disposé dans le dispositif d'interface, le dispositif d'interface étant connecté fonctionnellement au premier module de machine par le biais d'un réseau.

Selon l'invention, le premier capteur peut être disposé selon une position parmi sur la première machine, dans la première machine, et dans un premier module de machine associé à la première machine.

Selon l'invention, le système peut comporter par ailleurs un deuxième capteur agencé pour détecter un deuxième paramètre associé à la première machine, le deuxième capteur étant connecté fonctionnellement au premier processeur.

Selon l'invention, le premier capteur peut être en mesure de détecter au moins l'un parmi une vibration, un son, une pression, un mouvement, une accélération, une température, un champ magnétique, un champ électromagnétique, et une lumière.

Selon l'invention, le système peut comporter par ailleurs :
un deuxième capteur agencé pour détecter un deuxième paramètre associé à une deuxième machine ; et un deuxième processeur couplé fonctionnellement pour recevoir des données associées au deuxième paramètre en provenance du deuxième capteur, le deuxième processeur étant en mesure de traiter les données associées au deuxième paramètre par au moins l'une des actions suivantes consistant à effectuer une décomposition temps-fréquence, à effectuer un regroupement de phases, à effectuer une pseudo-distribution de temps-fréquence à corrélation croisée, et à effectuer une détection de crête sur une énergie commune pour détecter des deuxièmes cycles de machine.

L'invention comporte par ailleurs un procédé d'analyse des données, le procédé comportant les opérations consistant à :
effectuer une décomposition temps-fréquence d'un signal horaire associé au fonctionnement d'une machine pour produire une matrice complexe avec une décomposition temps-fréquence ;
effectuer un regroupement de phases sur la matrice complexe avec une décomposition temps-fréquence pour produire un vecteur réel de séquence d'étiquettes ;
effectuer une pseudo-distribution de temps-fréquence à corrélation croisée sur le vecteur réel de séquence d'étiquettes pour produire une matrice réelle avec une décomposition temps-fréquence ; et
effectuer une détection de crête sur une énergie commune sur la matrice réelle avec une décomposition temps-fréquence pour produire un vecteur réel d'énergie commune.

Selon l'invention, le procédé peut comporter par ailleurs, avant l'opération consistant à effectuer une décomposition temps-fréquence, l'opération consistant à obtenir le signal horaire associé au fonctionnement de la machine par la collecte de données en utilisant un capteur disposé au moins selon l'une des positions parmi dans et sur la machine.

Selon l'invention, l'opération consistant à effectuer une décomposition temps-fréquence peut comporter les opérations consistant à appliquer une fonction de fenêtre de Hann et à effectuer une transformée de Fourier à court terme.

Selon l'invention, l'opération consistant à effectuer un regroupement de phases peut comporter l'opération consistant à effectuer un regroupement adaptatif à k moyennes.

Selon l'invention, l'opération consistant à effectuer une pseudo-distribution de temps-fréquence à corrélation croisée peut comporter l'opération consistant à appliquer une corrélation croisée avec une largeur de fenêtre croissante et un décalage de temps croissant.

Selon l'invention, l'opération consistant à effectuer une détection de crête sur une énergie commune peut comporter l'opération consistant à calculer une énergie commune en additionnant les fenêtres pour chaque décalage de temps et en détectant les crêtes qui sont au moins l'une parmi isolée et étroite.

L'invention peut comporter par ailleurs un procédé de surveillance d'une machine qui comporte une étape d'apprentissage en fonction de l'un quelconque parmi le procédé défini précédemment, et une étape de suivi du processus.

L'opération de suivi du processus peut comprendre les opérations consistant à :
effectuer une décomposition temps-fréquence d'un signal horaire associé au fonctionnement d'une machine pour produire une matrice complexe avec une décomposition temps-fréquence ;
effectuer un regroupement de phases sur la matrice complexe avec une décomposition temps-fréquence pour produire un vecteur réel de séquence d'étiquettes ;
effectuer une pseudo-distribution de temps-fréquence à corrélation croisée sur le vecteur réel de séquence d'étiquettes pour produire une matrice réelle avec une décomposition temps-fréquence ;
effectuer une détection de crête sur une énergie commune sur la matrice réelle avec une décomposition temps-fréquence pour produire un vecteur réel d'énergie commune ; et
émettre en sortie des informations se rapportant au fonctionnement de la machine.

Selon l'invention, les informations se rapportant au fonctionnement de la machine peuvent comporter au moins des informations parmi la réalisation d'une pièce par la machine, un nombre total de pièces produites par la machine, un comptage total de cycles de la machine, un historique de temps des pièces produites par la machine, un historique de temps des cycles de la machine, une cadence de production des pièces par la machine, une efficacité de la production, un temps de cycle nécessaire pour la production d'une pièce, un écart par rapport à un paramètre prévu, et un taux d'utilisation de la machine.

L'invention peut par ailleurs comporter un système de surveillance de machine automatisé tel qu'il est défini ci-dessus dans les présentes.

Alors que l'invention sera décrite par rapport à certains modes de réalisation, il sera entendu que l'invention n'est pas limitée à ces modes de réalisation. Au contraire, l'invention comprend l'ensemble des variantes, modifications, et équivalents tels qu'ils peuvent être inclus dans le cadre de la présente divulgation.

Les objets et avantages ci-dessus et autres de la présente invention seront rendus apparents d'après les dessins annexes et la description de ceux-ci.

### Brève description des dessins

Les dessins annexes, qui sont incorporés dans cette description et qui constituent une partie de celle-ci, illustrent des modes de réalisation donnés à titre d'exemple de l'invention et, avec une description générale de l'invention donnée ci-dessus, et la description détaillée donnée ci-dessous, servent à expliquer les principes de l'invention.

D'autres avantages et caractéristiques de l'invention deviendront apparents lors de l'examen de la description détaillée d'un mode de réalisation, sans aucune limitation quelconque, et des dessins ci-joints, dans lesquels :
[Fig. 1] : la FIGURE 1 illustre un premier mode de réalisation donné à titre d'exemple d'un système de surveillance de machine automatisé en fonction des principes de la présente invention.
[Fig. 2] : la FIGURE 2 illustre un deuxième mode de réalisation donné à titre d'exemple d'un procédé de surveillance de machine automatisé en fonction des principes de la présente invention.
[Fig. 3] : la FIGURE 3 illustre un deuxième mode de réalisation donné à titre d'exemple d'un procédé de surveillance de machine automatisé en fonction des principes de la présente invention.

### Description détaillée

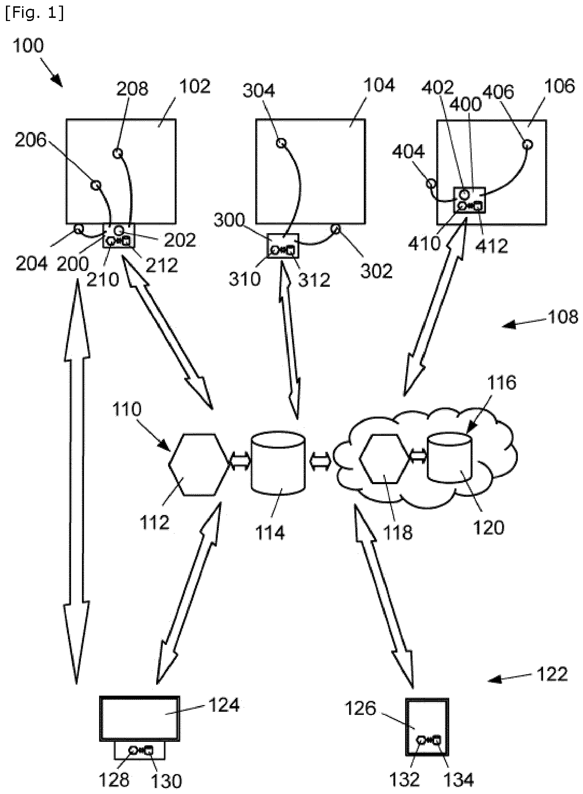

La FIG. 1 est un schéma de principe représentant un système de surveillance de machine automatisé 100 donné à titre d'exemple, en fonction d'au moins certains aspects de la présente divulgation. Le système 100 peut être utilisé avec une ou plusieurs machines de production 102, 104, 106. Les machines 102, 104, 106 peuvent comprendre, mais de façon non limitative, des machines à fraiser, des tours, des machines à meuler, des machines à découper (laser, jets d'eau, outils de coupe céramiques et métalliques), des machines à souder, des machines à poinçonner, des machines de fabrication additive, et/ou des machines à percer qui peuvent servir, par exemple, dans un processus de fabrication ou de production.

En référence à la machine 102, le système 100 peut comprendre un module de machine 200 qui peut être disposé sur la machine 102. Par exemple, le module de machine 200 peut être fixé sur une partie extérieure de la machine 102, comme au moyen de pièces de fixation (par exemple, des boulons) et/ou d'adhésif. Par exemple, le module de machine peut être disposé sur une armoire ou un logement de la machine 102. Dans certains modes de réalisation donnés à titre d'exemple, le module de machine 200 peut comprendre un processeur 210 configuré pour effectuer au moins certaines des différentes opérations décrites dans les présentes. Dans certains modes de réalisation donnés à titre d'exemple, le module de machine 200 peut comprendre un dispositif de stockage de données 212, qui peut être couplé fonctionnellement au processeur 210. Le dispositif de stockage de données 212 (et d'autres dispositifs de stockage de données décrits dans les présentes) peut être utilisé pour stocker des données et/ou des informations associées au fonctionnement des machines 102, 104, 106 et/ou pour stocker des instructions lisibles sur ordinateur qui peuvent être exécutées par le processeur 210 (et d'autres processeurs décrits dans les présentes) pour effectuer différentes opérations telles qu'elles sont décrites dans les présentes.

Le système 100 peut comprendre un ou plusieurs capteurs 202, 204, 206, 208, qui peuvent être configurés pour détecter des paramètres associés au fonctionnement de la machine 102. Chacun des capteurs 202, 204, 206, 208 peut être couplé fonctionnellement (par exemple, par le biais de fils ou sans fil) pour fournir des données se rapportant à de tels paramètres au module de machine 200.

Dans certains modes de réalisation donnés à titre d'exemple, un ou plusieurs capteurs 202 associés à la machine 102 peuvent être disposés sur le module de machine 200. Dans certains modes de réalisation donnés à titre d'exemple, un ou plusieurs capteurs 204 associés à la machine 102 peuvent être disposés sur une partie extérieure de la machine 102 à distance du module de machine 200. Par exemple, le capteur 204 peut être disposé sur une armoire ou un logement de la machine 102. Dans certains modes de réalisation donnés à titre d'exemple, un ou plusieurs capteurs 206, 208 peuvent être disposés de manière interne à l'intérieur de la machine 102. Par exemple, les capteurs 206, 208 peuvent être disposés sur un dispositif de maintien de pièce à usiner, une tête porte-outil, et/ou une structure de support.

En référence à la machine 104, le système 100 peut comprendre un module de machine 300 qui peut être associé à la machine 104. Par exemple, le module de machine 300 peut être disposé à proximité de la machine 104, mais sans y être attaché. Dans certains modes de réalisation donnés à titre d'exemple, le module de machine 300 peut comprendre un processeur 310 configuré pour effectuer au moins certaines des différentes opérations décrites dans les présentes. Dans certains modes de réalisation donnés à titre d'exemple, le module de machine 300 peut comprendre un dispositif de stockage de données 312, qui peut être couplé fonctionnellement au processeur 310.

Le système 100 peut comprendre un ou plusieurs capteurs 302, 304, qui peuvent être configurés pour détecter des paramètres associés au fonctionnement de la machine 104. Chacun des capteurs 302, 304 peut être couplé fonctionnellement (par exemple, par le biais de fils ou sans fil) pour fournir des données se rapportant à de tels paramètres au module de machine 300.

Dans certains modes de réalisation donnés à titre d'exemple, un ou plusieurs capteurs 302 associés à la machine 104 peuvent être disposés sur une partie extérieure de la machine 104 à distance du module de machine 200. Par exemple, le capteur 302 peut être disposé sur une armoire ou un logement de la machine 104. Dans certains modes de réalisation donnés à titre d'exemple, un ou plusieurs capteurs 304 peuvent être disposés de manière interne à l'intérieur de la machine 104. Par exemple, le capteur 304 peut être disposé sur un dispositif de maintien de pièce à usiner, une tête porte-outil, et/ou une structure de support.

En référence à la machine 106, le système 100 peut comprendre un module de machine 400 qui peut être disposé de manière interne à l'intérieur de la machine 106. Par exemple, le module de machine 400 peut être disposé sur un dispositif de maintien de pièce à usiner, une tête porte-outil, et/ou une structure de support dans la machine 106. Dans certains modes de réalisation donnés à titre d'exemple, le module de machine 400 peut comprendre un processeur 410 configuré pour effectuer au moins certaines des différentes opérations décrites dans les présentes. Dans certains modes de réalisation donnés à titre d'exemple, le module de machine 400 peut comprendre un dispositif de stockage de données 412, qui peut être couplé fonctionnellement au processeur 410.

Le système 100 peut comprendre un ou plusieurs capteurs 402, 404, 406 qui peuvent être configurés pour détecter des paramètres associés au fonctionnement de la machine 106. Chacun des capteurs 402, 404, 406 peut être couplé fonctionnellement (par exemple, par le biais de fils ou sans fil) pour fournir des données se rapportant à de tels paramètres au module de machine 400.

Dans certains modes de réalisation donnés à titre d'exemple, un ou plusieurs capteurs 402 associés à la machine 106 peuvent être disposés sur le module de machine 400. Dans certains modes de réalisation donnés à titre d'exemple, un ou plusieurs capteurs 404 associés à la machine 106 peuvent être disposés sur une partie extérieure de la machine 106 à distance du module de machine 400. Par exemple, le capteur 404 peut être disposé sur une armoire ou un logement de la machine 106. Dans certains modes de réalisation donnés à titre d'exemple, un ou plusieurs capteurs 406 peuvent être disposés de manière interne à l'intérieur de la machine 106. Par exemple, le capteur 406 peut être disposé sur un dispositif de maintien de pièce à usiner, une tête porte-outil, et/ou une structure de support.

Dans certains modes de réalisation donnés à titre d'exemple, les modules de machine 200, 300, 400 peuvent être couplés fonctionnellement à un réseau 108 pour faciliter la communication avec d'autres dispositifs, tels qu'un ou plusieurs dispositifs informatiques 110, qui peuvent comprendre un processeur 112 et/ou un dispositif de stockage de données 114. Dans certains modes de réalisation donnés à titre d'exemple, le réseau 108 peut comprendre un réseau privé fournissant la connectivité entre les modules de machine 200, 300, 400 et le dispositif informatique 110, comme sur un site de fabrication. Dans certains modes de réalisation donnés à titre d'exemple, le réseau 108 peut comprendre le réseau Internet public et le dispositif informatique 110 peut être situé à distance par rapport au site de fabrication. Généralement, le réseau 108 peut utiliser des technologies de communications par fil et/ou sans fil appropriées quelconques.

Dans certains modes de réalisation donnés à titre d'exemple, les modules de machine 200, 300, 400 peuvent être configurés pour communiquer avec un ou plusieurs dispositifs informatiques en nuage 116, qui peuvent comprendre un processeur 118 et/ou un dispositif de stockage de données 120. Par exemple, les modules de machine 200, 300, 400 peuvent communiquer directement avec le dispositif informatique en nuage 116, sur le réseau 108, qui peut comprendre le réseau Internet public. En variante ou de plus, les modules de machine 200, 300, 400 peuvent communiquer avec le dispositif informatique en nuage 116 par le biais du dispositif informatique 110, qui peut communiquer avec le dispositif informatique en nuage 116, comme par le biais du réseau Internet public.

Le système 100 peut comprendre un ou plusieurs dispositifs d'interface 122, tels qu'un ou plusieurs ordinateurs personnels 124 (par exemple, un ordinateur de bureau ou un ordinateur portable) et/ou un ou plusieurs dispositifs mobiles 126 (par exemple, un téléphone intelligent ou une tablette électronique). Dans certains modes de réalisation donnés à titre d'exemple, les dispositifs d'interface 122 peuvent être utilisés par du personnel qui peut bénéficier d'un accès à des informations en temps réel (ou en temps quasi réel) et/ou des informations historiques se rapportant au fonctionnement des machines 102, 104, 106. Par exemple, un propriétaire d'entreprise et/ou un directeur d'usine peuvent utiliser les dispositifs d'interface 122 pour obtenir des informations se rapportant au fonctionnement des machines 102, 104, 106 sur demande et/ou pour recevoir des alertes automatisées se rapportant au fonctionnement des machines 102, 104, 106.

Dans certains modes de réalisation donnés à titre d'exemple, les dispositifs d'interface 122 peuvent être configurés pour recevoir des données se rapportant au fonctionnement d'une ou de plusieurs parmi les machines 102, 104, 106 par le biais du dispositif informatique 110 et/ou par le biais du dispositif informatique en nuage 116. En variante ou de plus, certains systèmes 100 peuvent être configurés pour diriger la communication entre les modules de machine 200, 300, 400 et le dispositif d'interface 122, comme par le biais d'un réseau privé et/ou du réseau Internet public. L'ordinateur personnel 124 peut comprendre un processeur 128 configuré pour effectuer au moins certaines des différentes opérations décrites dans les présentes. L'ordinateur personnel 124 peut comprendre un dispositif de stockage de données 130, qui peut être couplé fonctionnellement au processeur 128. Le dispositif mobile 126 peut comprendre un processeur 132 configuré pour effectuer au moins certaines des différentes opérations décrites dans les présentes. Le dispositif mobile 126 peut comprendre un dispositif de stockage de données 134, qui peut être couplé fonctionnellement au processeur 132.

Dans certains modes de réalisation donnés à titre d'exemple, les données se rapportant aux machines 102, 104 106 obtenues par un ou plusieurs capteurs 202, 204, 206, 208, 302, 304, 402, 404, 406 (par exemple, des accéléromètres) peuvent être analysées et les informations pertinentes concernant les opérations des machines 102, 104, 106 peuvent être fournies par le biais des dispositifs d'interface 122. Par exemple, les données peuvent être analysées pour identifier et compter les cycles de machine et pour fournir des alertes automatisées concernant les cycles de machine.

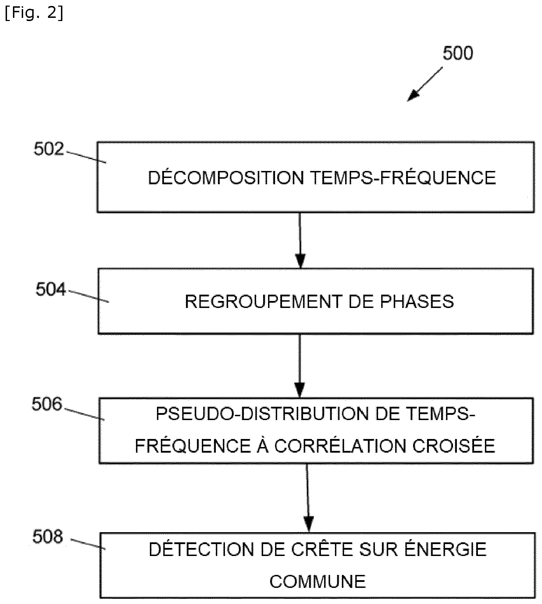

La FIG. 2 est un organigramme d'un procédé d'analyse des données 500 donné à titre d'exemple, pour par exemple identifier et compter les cycles de machine, en fonction d'au moins certains aspects de la présente divulgation. L'opération 502 comprend l'opération consistant à effectuer une décomposition temps-fréquence. L'opération 504 suit l'opération 502. L'opération 504 comprend l'opération consistant à effectuer un regroupement de phases. L'opération 506 suit l'opération 504. L'opération 506 comprend une pseudo-distribution de temps-fréquence à corrélation croisée. L'opération 508 l'opération suit 506. L'opération 508 comprend une détection de crête sur une énergie commune.

Dans certains modes de réalisation donnés à titre d'exemple, l'opération 502 peut être précédée par une ou plusieurs autres opérations, telles que les opérations consistant à collecter les données destinées à être analysées, à stocker les données destinées à être analysées (par exemple, dans un ou plusieurs dispositifs de stockage de données 212, 312, 412, 114, 120, 130, 134), à récupérer les données destinées à être analysées (par exemple, en provenance d'un ou de plusieurs dispositifs de stockage de données 212, 312, 412, 114, 120, 130, 134), à transmettre les données destinées à être analysées, et/ou à recevoir les données destinées à être analysées.

Dans certains modes de réalisation donnés à titre d'exemple, l'opération 502, une décomposition temps-fréquence, peut comprendre l'opération consistant à effectuer une transformée de Fourier à court terme sur les données (signaux horaires). Dans certains modes de réalisation donnés à titre d'exemple, ceci peut comprendre l'opération consistant à appliquer une fonction de fenêtre de Hann sur le signal horaire avant l'application de la transformée de Fourier discrète.

La sortie de l'opération 502 comprend une matrice complexe avec une décomposition temps-fréquence.

Dans certains modes de réalisation donnés à titre d'exemple, une fréquence d'échantillonnage peut être d'environ 10 kHz et il peut y avoir environ 1024 échantillons dans chaque bloc d'une durée d'environ 0,1 seconde. Sur chacun des 1024 échantillons, la fenêtre de Hann peut être appliquée sur le signal horaire avant l'application de la transformée de Fourier discrète.

Dans certains modes de réalisation donnés à titre d'exemple, l'opération 504, un regroupement de phases, peut comprendre l'opération consistant à effectuer un regroupement adaptatif à k moyennes pour une réduction de dimensionnalité sur la matrice complexe avec une décomposition temps-fréquence résultant de l'opération 502.

La sortie de l'opération 504 comprend un vecteur réel de séquence d'étiquettes.

Dans certains modes de réalisation donnés à titre d'exemple, l'opération de regroupement peut réduire la dimensionnalité de 1024 à 1. Le nombre de groupes peut être choisi en considération de la convergence de l'inertie entre groupes. Les centroïdes du groupe initial peuvent être établis de manière aléatoire, et l'ensemble final de centroïdes du groupe peut être obtenu par le calcul récursif des centroïdes dans le processus de regroupement adaptatif à k moyennes.

Dans certains modes de réalisation donnés à titre d'exemple, l'opération 506, une pseudo-distribution de temps-fréquence à corrélation croisée, peut comprendre l'opération consistant à appliquer une corrélation croisée avec une largeur de fenêtre croissante (période) et un décalage de temps croissant pour effectuer une décomposition temps-fréquence sur le vecteur réel de séquence d'étiquettes résultant de l'opération 504.

La sortie de l'opération 506 comprend une matrice réelle avec une décomposition temps-fréquence.

Dans certains modes de réalisation donnés à titre d'exemple, l'opération 508, une détection de crête sur une énergie commune, peut comprendre l'opération consistant à calculer l'énergie commune en additionnant toutes les fenêtres pour chaque décalage de temps de la matrice réelle avec une décomposition temps-fréquence résultant de l'opération 506. La détection de crête peut être basée sur la détection de crêtes isolées et/ou étroites. Les crêtes détectées peuvent être mises en corrélation avec les cycles de machine et, ainsi, peuvent indiquer les cycles de machine.

La sortie de l'opération 508 comprend un vecteur réel d'énergie commune.

Dans certains modes de réalisation donnés à titre d'exemple, l'opération 508 peut être suivie par une ou plusieurs autres opérations, telles que les opérations consistant à stocker des informations se rapportant aux cycles de machine détectés (par exemple, dans un ou plusieurs dispositifs de stockage de données 212, 312, 412, 114, 120, 130, 134), à récupérer les données, à afficher les données, et/ou à en outre analyser les données.

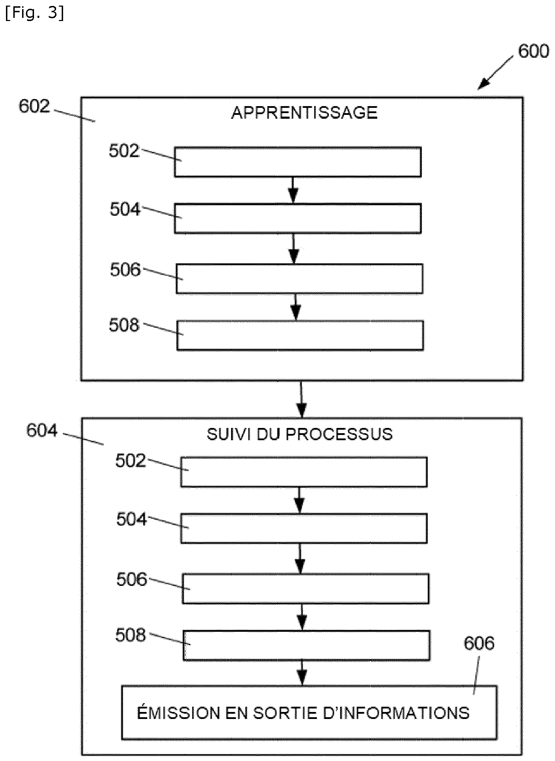

La FIG. 3 est un organigramme d'un procédé de surveillance d'une machine 600 donné à titre d'exemple, en fonction d'au moins certains aspects de la présente divulgation. L'opération 602 peut comprendre l'opération d'apprentissage, telle qu'un apprentissage non supervisé, dans lequel le système 100 analyse les données pour établir (ou rétablir) automatiquement des connaissances de base concernant le fonctionnement d'une machine particulière. L'opération 604 peut suivre l'opération 602. L'opération 604 peut comprendre l'opération de suivi du processus, telle que le comptage de cycles, associée au fonctionnement de la machine particulière. Dans certains modes de réalisation donnés à titre d'exemple, le système 100 peut effectuer l'opération 602, l'apprentissage, après l'installation initiale du système 100. Puis, le système 100 peut effectuer l'opération 604, le suivi du processus, de façon continue. Dans certains modes de réalisation donnés à titre d'exemple, l'opération 602, l'apprentissage, peut être répétée, par exemple conformément à la demande d'un utilisateur, après une période de temps prédéterminée, et/ou si un changement significatif dans les données opérationnelles est détecté.

Dans certains modes de réalisation donnés à titre d'exemple, l'opération 602, l'apprentissage, peut comprendre les opérations 502, 504, 506, et/ou 508 décrites ci-dessus par rapport à la FIG. 2. Au cours de l'opération 502 dans l'opération 602, toutes les transformées de Fourier discrètes peuvent être enregistrées. Les données utilisées, classifiées, et analysées dans l'opération 602 peuvent représenter les connaissances primitives de l'apprentissage de la machine utilisé dans l'opération 604. Par exemple, dans l'opération 604, les données d'entrée sont classifiées et analysées en ce qui concerne la séquence prévue définie dans l'opération 602.

Dans certains modes de réalisation donnés à titre d'exemple, l'opération 604, le suivi du processus, peut comprendre les opérations 502, 504, 506, et/ou 508 décrites ci-dessus par rapport à la FIG.2. Au cours de l'opération 502 dans l'opération 604, les transformées de Fourier discrètes peuvent ne pas être enregistrées et peuvent être utilisées uniquement en temps réel pour l'opération 504. Après l'opération 504, le résultat de l'opération 502 dans l'opération 604 peut être oublié (afin d'éviter un débordement de mémoire). Au cours de l'opération 504 dans l'opération 604, le nombre de groupes peut être fixé et les centroïdes de groupe peuvent se déplacer en se basant sur les calculs récursifs. Au cours de l'opération 506 dans l'opération 604, l'analyse est concentrée sur des cycles identifiés précédemment. Par exemple, sur l'opération 604, l'opération 506 peut ne pas avoir besoin d'être effectuée avec une grande plage de décalage de temps mais, plutôt, peut être effectuée uniquement dans une courte plage proche de la durée de cycle prévue. Au cours de l'opération 508 dans l'opération 604, en plus de la détection de crête, d'autres descripteurs (par exemple, l'écart, l'asymétrie, l'aplatissement) basés sur l'énergie commune peuvent être utilisés pour suivre les évolutions et les défauts dans le processus. Par exemple, toute évolution brusque ou progressive des quatre premiers moments statistiques peut être analysée comme étant une évolution possible ou une défaillance dans le processus.

Dans certains modes de réalisation donnés à titre d'exemple, l'opération 604 peut comprendre une opération 606, qui peut comprendre une opération consistant à émettre en sortie des informations, telles que des informations se rapportant au fonctionnement des machines 102, 104, 106, qui peuvent être affichées sur les dispositifs d'interface 122. Dans certains modes de réalisation donnés à titre d'exemple, l'opération consistant à émettre en sortie des informations 606 peut comprendre les opérations consistant à identifier, à détecter, à déterminer, à calculer, et/ou à transmettre des informations associées à l'une ou plusieurs parmi les actions suivantes :
- la réalisation d'une pièce par la machine
- un nombre total de pièces produites par la machine
- un comptage total de cycles de la machine
- un historique de temps des pièces produites par la machine
- un historique de temps des cycles de la machine
- une cadence de production des pièces par la machine
- une efficacité de la production
- un temps de cycle nécessaire pour la production d'une pièce ou d'un lot de pièces
- un écart par rapport à un paramètre prévu ou historique
- un taux d'utilisation de la machine, tel que la fraction de temps pendant laquelle la machine est utilisée.

L'opération 606 peut comprendre l'opération consistant à préparer des rapports comprenant des données et/ou des informations collectées et/ou traitées. L'opération 606 peut comprendre l'opération consistant à générer des alertes automatisées en se basant sur la comparaison des données et/ou des informations par rapport à des valeurs de seuil prédéterminées et/ou des valeurs historiques. Dans certains modes de réalisation donnés à titre d'exemple, les données et/ou les informations peuvent être présentées de manière numérique et/ou de manière graphique sur les dispositifs d'interface 122.

Dans certains modes de réalisation donnés à titre d'exemple, différentes opérations 502, 504, 506, 508, 602, 604, 606 (ou parties de celles-ci) associées aux procédés donnés à titre d'exemple 500, 600 peuvent être effectuées par l'un quelconque ou plusieurs des processeurs 112, 118, 128, 132, 210, 310, 410 associés à différents composants du système 100. Dans certains modes de réalisation donnés à titre d'exemple, les procédés 500, 600 peuvent être sensiblement effectués par les processeurs 210, 310, 410 associés aux modules de machine 200, 300, 400, respectivement. Les informations émises en sortie (opération 606) peuvent être transmises aux dispositifs d'interface 122 directement et/ou par le biais du dispositif informatique 110 et/ou du dispositif informatique en nuage 116.

Dans certains modes de réalisation donnés à titre d'exemple, au moins certaines opérations 502, 504, 506, 508, 602, 604, 606 (ou parties de celles-ci) associées aux procédés 500, 600 peuvent être effectuées par les processeurs 112, 118 associés au dispositif informatique 110 et/ou au dispositif informatique en nuage 116, respectivement. Les modules de machine 200, 300, 400 peuvent être configurés pour transmettre des données brutes et/ou des données partiellement traitées au dispositif informatique 110 et/ou au dispositif informatique en nuage 116. Le dispositif informatique 110 et/ou le dispositif informatique en nuage 116 peuvent transmettre des informations émises en sortie (opération 606) aux dispositifs d'interface 122.

Dans certains modes de réalisation donnés à titre d'exemple, au moins certaines opérations 502, 504, 506, 508, 602, 604, 606 (ou parties de celles-ci) associées aux procédés 500, 600 peuvent être effectuées par les processeurs 128, 132 associés aux dispositifs d'interface 122 (ordinateur personnel 124 et/ou dispositif mobile 126, respectivement). Les modules de machine 200, 300, 400 peuvent être configurés pour transmettre des données brutes et/ou des données partiellement traitées directement aux dispositifs d'interface 122, qui peuvent effectuer au moins certaines opérations associées aux procédés 500, 600. Dans certains modes de réalisation donnés à titre d'exemple, les modules de machine 200, 300, 400 peuvent transmettre des données brutes et/ou des données partiellement traitées au dispositif informatique 110 et/ou au dispositif informatique en nuage 116, qui peuvent par ailleurs transmettre les données aux dispositifs d'interface 122. Dans certains modes de réalisation donnés à titre d'exemple, le dispositif informatique 110 et/ou le dispositif informatique en nuage 116 peuvent effectuer au moins certaines opérations associées aux procédés 500, 600 avant de transmettre les données aux dispositifs d'interface 122. Dans certains modes de réalisation donnés à titre d'exemple, les dispositifs d'interface 122 peuvent produire au moins certaines des informations émises en sortie (opération 606) en traitant des données reçues directement et/ou indirectement en provenance des modules de machine 200, 300, 400.

Dans certains modes de réalisation donnés à titre d'exemple, les données collectées et/ou traitées par le système 100 peuvent être utilisées à des fins autres que la surveillance de la production. Par exemple, certains systèmes 100 peuvent être configurés pour identifier et/ou transmettre des alertes quand certaines conditions se produisent et/ou sont anticipées, telles qu'une nécessité de maintenance préventive et/ou une panne de machine.

Dans certains modes de réalisation donnés à titre d'exemple, le système 100 peut être en mesure de fonctionner avec un minimum d'interaction de l'utilisateur nécessaire pour les réglages. Par exemple, un module de machine 200 peut être installé sur la machine 102, connecté au réseau 108, et mis sous tension. Puis, le module de machine 200 peut effectuer automatiquement le procédé 600, y compris l'opération d'apprentissage 602 et l'opération de suivi du processus 604, sensiblement sans autre interaction de l'utilisateur.

Dans différents modes de réalisation donnés à titre d'exemple en fonction d'au moins certains aspects de la présente divulgation, certains capteurs donnés à titre d'exemple 202, 204, 206, 208, 302, 304, 402, 404, 406 peuvent être configurés pour détecter différents paramètres associés au fonctionnement des machines 102, 104, 106, tels qu'un ou plusieurs parmi une vibration, un son, une pression, un mouvement, une accélération, une température, un champ magnétique, un champ électromagnétique, et/ou une lumière (optique).

Généralement, le système 100 peut comprendre un capteur quelconque en mesure de détecter des dynamiques de mesures physiques, telles que des accéléromètres, des microphones, des extensomètres, des capteurs de charge, des patchs ou des empilements piézoélectriques, des capteurs de proximité (à courants de Foucault et/ou capacitifs), des lasers, des capteurs ultrasonores, et/ou des caméras. Dans certains modes de réalisation donnés à titre d'exemple, un ou plusieurs capteurs peuvent être en mesure de détecter des actions associées à une machine, telles que l'ouverture d'une porte, le changement d'un outil, le chargement ou le déchargement d'une pièce, etc. Dans certains modes de réalisation donnés à titre d'exemple, le système 100 peut être configuré pour faire la distinction entre certains événements (tels que l'ouverture de porte, le changement d'outil, etc.) par rapport à un fonctionnement normal de la machine et pour filtrer ces événements lors de l'analyse. Dans certains modes de réalisation donnés à titre d'exemple, le système 100 peut être configuré pour associer certains événements (tels que l'ouverture de porte, le changement d'outil, etc.) avec une opération de la machine et/ou des cycles de machine et de tels événements peuvent être utilisés au cours des opérations d'analyse décrites dans les présentes.

L'annexe 1 (ci-jointe aux présentes et incorporée dans cette divulgation) comprend des informations supplémentaires concernant des algorithmes et des opérations mathématiques donnés à titre d'exemple qui peuvent être utilisés en ce qui concerne certains modes de réalisation donnés à titre d'exemple en fonction d'au moins certains aspects de la présente divulgation. L'annexe 1 est fournie à des fins d'explication de certains modes de réalisation donnés à titre d'exemple et ne doit pas être considérée comme étant limitative d'une quelconque manière.

Alors que la présente invention a été illustrée par une description de différents modes de réalisation, et alors que ces modes de réalisation ont été décrits au moyen de détails considérables, il n'est pas prévu de restreindre ou de limiter de quelque façon que ce soit l'étendue des revendications annexées à de tels détails. Les différentes caractéristiques représentées et décrites dans les présentes peuvent être utilisées seules ou dans n'importe quelle combinaison. Des avantages et modifications supplémentaires apparaîtront facilement à ceux du métier. L'invention dans ses aspects les plus généraux n'est par conséquent pas limitée aux détails spécifiques, à l'appareil et au procédé représentatifs, et à l'exemple illustratif représenté et décrit.

## Revendications

1. Procédé de surveillance d'une machine, le procédé comportant :
- une étape d'apprentissage mettant en oeuvre les opérations d'un procédé d'analyse des données par un premier processeur (210) pour identifier et compter les cycles de machine,
le procédé d'analyse de données comportant les opérations consistant à :
• effectuer une décomposition temps-fréquence (502) d'un signal horaire associé au fonctionnement d'une machine pour produire une matrice complexe avec une décomposition temps-fréquence ;
• effectuer un regroupement de phases (504) sur la matrice complexe avec une décomposition temps-fréquence pour produire un vecteur réel de séquence d'étiquettes ;
• effectuer une pseudo-distribution de temps-fréquence à corrélation croisée (506) sur le vecteur réel de séquence d'étiquettes pour produire une matrice réelle avec une décomposition temps-fréquence ; et
• effectuer une détection de crête sur une énergie commune (508) sur la matrice réelle avec une décomposition temps-fréquence pour produire un vecteur réel d'énergie commune,
- une étape d'affichage par un dispositif d'interface en mesure d'afficher au moins les données ou informations parmi les données traitées et des informations se rapportant aux données,
- une étape de suivi du processus.

2. Procédé selon la revendication 1, comportant par ailleurs, avant l'opération (502) consistant à effectuer une décomposition temps-fréquence (502), l'opération (502) consistant à obtenir le signal horaire associé au fonctionnement de la machine par la collecte de données en utilisant un capteur disposé au moins selon l'une des positions parmi dans et sur la machine.

3. Procédé selon la revendication 1, dans lequel l'opération consistant à effectuer une décomposition temps-fréquence (502) comporte les opérations consistant à appliquer une fonction de fenêtre de Hann et à effectuer une transformée de Fourier à court terme.

4. Procédé selon la revendication 1, dans lequel l'opération consistant à effectuer un regroupement de phases (504) comporte l'opération consistant à effectuer un regroupement adaptatif à k moyennes.

5. Procédé selon la revendication 1, dans lequel l'opération consistant à effectuer une pseudo-distribution de temps-fréquence à corrélation croisée (506) comporte l'opération consistant à appliquer une corrélation croisée avec une largeur de fenêtre croissante et un décalage de temps croissant.

6. Procédé selon la revendication 1, dans lequel l'opération consistant à effectuer une détection de crête sur une énergie commune (508) comporte l'opération consistant à calculer une énergie commune en additionnant les fenêtres pour chaque décalage de temps et en détectant les crêtes qui sont isolées et/ou étroites.

7. Procédé selon la revendication 1, dans lequel l'étape de suivi du processus comprend les opérations consistant à :
• effectuer une décomposition temps-fréquence d'un signal horaire associé au fonctionnement d'une machine pour produire une matrice complexe avec une décomposition temps-fréquence ;
• effectuer un regroupement de phases sur la matrice complexe avec une décomposition temps-fréquence pour produire un vecteur réel de séquence d'étiquettes ;
• effectuer une pseudo-distribution de temps-fréquence à corrélation croisée sur le vecteur réel de séquence d'étiquettes pour produire une matrice réelle avec une décomposition temps-fréquence
• effectuer une détection de crête sur une énergie commune sur la matrice réelle avec une décomposition temps-fréquence pour produire un vecteur réel d'énergie commune ; et
• émettre en sortie des informations se rapportant au fonctionnement de la machine.

8. Procédé selon la revendication 7, dans lequel les informations se rapportant au fonctionnement de la machine comportent au moins des informations parmi la réalisation d'une pièce par la machine, un nombre total de pièces produites par la machine, un comptage total de cycles de la machine, un historique de temps des pièces produites par la machine, un historique de temps des cycles de la machine, une cadence de production des pièces par la machine, une efficacité de la production, un temps de cycle nécessaire pour la production d'une pièce, un écart par rapport à un paramètre prévu, et un taux d'utilisation de la machine.
